# NEUE EUROPÄISCHE PATENTSCHRIFT

(11) **EP 1 569 592 B2**
(45) Veröffentlichungstag und Bekanntmachung des Hinweises auf die Entscheidung über den Einspruch: **11.01.2017**
(45) Hinweis auf die Patenterteilung: 25.02.2009
(21) Anmeldenummer: 03780104.0
(22) Anmeldetag: 02.12.2003
(51) Int. Cl.: A61G 10/02, F24F 11/00

(54) **AUFENTHALTSRAUM UND VERFAHREN ZUM EINSTELLEN DER RAUMATMOSPHÄRE**
RECREATION ROOM AND METHOD FOR CONTROLLING THE ATMOSPHERE IN THE ROOM
SALLE DE DETENTE OU DE SPORT ET PROCEDE DE REGLAGE DE L'ATMOSPHERE DE CETTE SALLE

(30) Priorität: 02.12.2002 DE 10257155
(43) Veröffentlichungstag der Anmeldung: 07.09.2005
(73) Patentinhaber: Spiegel, Volker, 13125 Berlin (DE)
(72) Erfinder: SPIEGEL, Volker, 13125 Berlin (DE); FUCHS, Ulrich, 13055 Berlin (DE)
(74) Vertreter: Eisenführ Speiser
(86) Internationale Anmeldenummer: PCT/EP2003/013599
(87) Internationale Veröffentlichungsnummer: WO 2004/050003

(56) Entgegenhaltungen:
- EP-A- 0 363 553
- WO-A-97/03631
- US-A- 5 860 857
- PATENT ABSTRACTS OF JAPAN vol. 1998, no. 13, 30. November 1998 (1998-11-30) & JP 10 216455 A (TABAI ESPEC CORP), 18. August 1998 (1998-08-18)

## Beschreibung

Die Erfindung betrifft ein Verfahren zum Einstellen einer Raumluft in einem Aufenthaltsraum, bei dem die Raumluft kontinuierlich oder in wiederkehrenden Zeitintervallen durch Stickstoff oder ein stickstoffhaltiges, kohlendioxidarmes Gasgemisch derart ergänzt wird, dass der Sauerstoffanteil der Raumluft weniger als 20,9 % beträgt. Die Erz findung betrifft ebenso einen Aufenthaltsraum für Menschen oder Tiere, insbesondere einen Sportübungsraum, der mit Raumluft gefüllt ist, welche einen geringeren Sauerstoffpartialdruck aufweist als eine den Aufenthaltsraum umgebende Außenatmosphäre. Die Erfindung betrifft schließlich eine Raumluftanlage für einen solchen Aufenthaltsraum.

Unter Aufenthaltsraum wird im vorliegenden Fall ein Raum verstanden, in dem sich Menschen oder Tiere aufhalten können. Insbesondere wird unter einem Aufenthaltsraum auch ein Sportübungsraum verstanden.

Sportübungsräume, deren Raumluft einen gegenüber einer den Sportübungsraum umgebenden Außenatmosphäre verringerten Sauerstoffpartialdruck aufweist, sind grundsätziich bekannt. Ebenso sind Verfahren bekannt, wie ein solcher verringerter Sauerstoffpartialdruck in dem Aufenthaltsraum eingestellt wird.

Im einfachsten Fall wird der gesamte Luftdruck in dem Aufenthaltsraum gegenüber der Außenatmosphäre abgesenkt. Auf diese Weise stellen sich in dem Aufenthaltsraum . ähnliche Druckverhältnisse ein, wie sie auch in größeren Höhenlagen herrschen. Um den Gesamtluftdruck in dem Aufenthaltsraum abzusenken, muss der Aufenthaltsraum jedoch praktisch hermetisch abgedichtet werden. Dies ist sehr aufwendig. Im Falle eines Sportübungsraumes ist der notwendige Luftaustausch nur mit erheblichem Aufwand möglich.

Daher wurden beispielsweise in der EP 0 959 862 und der EP 0 789 546 vorgeschlagen, in dem Aufenthaltsraum nicht den Gesamtdruck abzusenken, sondern den Sauerstoffpartialdruck in dem Aufenthaltsraum dadurch abzusenken, dass der Stickstoffpartialdruck erhöht wird. Es hat sich herausgestellt, dass die vorgeschlagenen Verfahren sämtlich einen hohen operativen Aufwand und einen kostspieligen Betrieb mit sich bringen.

Ausgehend von diesem Stand der Technik liegt der vorliegenden Erfindung die Aufgabe zugrunde, ein Verfahren sowie einen Aufenthaltsraum und eine Raumluftanlage der eingangs genannten Art anzubieten, die einen möglichst kostengünstigen Betrieb eines Aufenthaltsraums ermöglichen, dessen Raumluft einen verringerten Sauerstoffanteil aufweist.

Erfindungsgemäß wird diese Aufgabe durch ein Verfahren gemäß Anspruch 1 gelöst, bei dem in dem Aufenthaltsraum wenigstens ein geringer Überdruck gegenüber einer den Aufenthaltsraum umgebenden Außenatmosphäre eingestellt wird. Der Kohlendioxidanteil der Raumluft wird auf eine Konzentration anfänglich unter 0,04 Vol % und dann auf eine CO2-Konzentration unterhalb festgelegter Grenzwerte, höchstens aber 1 bis 0,65 Vol% eingestellt. Das Einstellen des gewünschten Sauerstoffanteils der Raumluft sowie des gewünschten Kohlendioxidanteils geschieht durch regelmäßiges Ergänzen der Raumluft, vorzugsweise im Umluftbetrieb der Raumluft.

Der Erfindung liegt die Erkenntnis zugrunde, dass ein nur geringer Überdruck, von beispielsweise 10 bis 100 Pa einen nur sehr mäßig abgedichteten Raum erfordert und dazu führt, dass verbleibende Undichtigkeiten des Aufenthaltsraums einen ständigen Austausch der Raumluft in dem Aufenthaltsraum dadurch herbeiführen, dass Raumluft durch die Undichtigkeiten austritt und durch der Raumluft zugeführte, aufbereitete Umgebungsluft aus der Außenatmosphäre ersetzt wird.

Erfindungsgemäß wird die Raumluft im Umluftbetrieb geführt und im Umluftbetrieb durch das stickstoffhaltige, kohlendioxidarme Gasgemisch ergänzt. Der durch den Umluftbetrieb bewirkte Luftaustausch der Raumluft in dem Aufenthaltsraum wird vorzugsweise so eingestellt, dass in dem Aufenthaltsraum eine homogene Atmosphäre herrscht.

Unter einem stickstoffhaltigen, kohlendioxidarmen Gasgemisch wird ein Gasgemischs verstanden, welches gegenüber einer Außen- oder Umgebungsluft einen größeren Stickstoffanteil aufweist.

Der Kohlendioxidanteil der Raumluft wird vorzugsweise dadurch eingestellt, dass im Umluftbetrieb der Raumluft ein Anteil der Raumluft durch kohlendioxidarme Luft aus der Außenatmosphäre ersetzt wird. Die Luft der Außenatmosphäre besitzt dabei einen normalen Sauerstoffanteil. Der Anteil der im Umluftbetrieb ausgetauschten Raumluft wird so eingestellt, dass die Raumluft eine Kohlendioxidkonzentration von anfänglich weniger als 0,04 Vol % und dann eine CO2-Konzentration unterhalb festgelegter Grenzwerte verbleibt, höchstens aber 1 bis 0,65 Vol% besitzt.

Alternativ ist es möglich, den Kohlendioxidanteil der Luft auf chemischen Wege, insbesondere mit Hilfe von Spezialkalk zu senken.

Vorzugsweise wird die im Umluftbetrieb geführte Raumluft durch geregelte ionisation derart behandelt, dass die Raumluft mit gegenüber der Außenatmosphäre vermindertem Sauerstoffgehalt und niedrigem Kohlendioxidgehalt über mehrere Umluftzyklen eine hohe Luftqualität beibehält. Durch die geregelte Ionisation wird insbesondere der Anteil von Kohlenwasserstoffen in der Raumluft gesenkt. In diesem Sinne wird als wesentliches Kriterium der Luftqualität der Raumluft deren Gehalt an Kohlenwasserstoff und Keimen betrachtet. Das Mischen des Gasgemisches für die Ergänzung der Raumluft erfolgt vorzugsweise bei Über- oder Unterdruck.

Das Mischen wird erfindungsgemäß in einer Mischkammer durchgeführt, der die zu mischenden Komponenten des Gasgemisches in Abhängigkeit der gewünschten Zusammensetzung des Gasgemisches der Mischkammer mit Über- oder Unterdruck zugeführt werden. Falls das Mischen des Gasgemisches bei Überdruck erfolgt, werden die Komponenten mit unterschiedlichem Überdruck der Mischkammer zugeführt. Falls in der Mischkammer ein Unterdruck herrscht, werden die Komponenten des Gasge-misches mit unterschiedlichem Unterdruck der Mischkammer zugeführt. Die Komponenten des Gasgemisches sind zum einen Luft aus der Außenatmosphäre und zum anderen Stickstoff.

Bevorzugt ist ein Verfahren, bei dem das stickstoffhaltige Gasgemisch durch Lufttrennung mittels einer Separationsanlage erzeugt wird, der die Raumluft im Umluftbetrieb zugefügt wird, und bei dem der Umluft außerdem Umgebungsluft oder Stickstoff oder ein stickstoffhaltiges Gasgemisch in einer Menge zugemischt wird, die einem Äquivalent der bei der Lufttrennung anfallenden Abluft mit erhöhtem Sauerstoffgehalt entspricht. Ein derartiges Verfahren erlaubt es, eine Raumluft mit vermindertem Sauerstoffpartialdruck unter Verwendung einer Separationsanlage zu erzeugen.

Bei der Bestimmung des Äquivalentes der bei der Lufttrennung anfallenden Abluft mit erhöhtem Sauerstoffgehalt ist zu berücksichtigen, der aus der Separationsanlage abgeführte Abluftvolumenstrom mit erhöhtem Sauerstoffgehalt nicht der einzige Abluftvolumenstrom ist. Vielmehr muss ein mehrfaches des aus der Separationsanlage abgeführten Abluftvolumenstroms der Umluft an frischer Umgebungsluft (Frischluftvolumenstrom) oder auch an stickstoffangereichertem Gasgemisch zugeführt werden, so dass sich wenigstens ein zweiter Abluftvolumenstrom ergibt, der aus dem Umluftvolumenstrom abzuzweigen ist und zusammen mit dem aus der Separations-anlage abgeführten Abluftvolumenstrom und dem Leckvolumenstrom für eine ausgeglichene Volumenbilanz sorgt.

Bevorzugt ist außerdem ein Verfahren, bei dem das stickstoffhaltige Gasgemisch durch Lufttrennung aus Umgebungsluft hergestellt wird. Hierzu kann die zuvor genannte Separationsanlage verwendet werden.

Im Zusammenhang mit dem letzt genannten Verfahren wird ein bei der Lufttrennung anfallendes sauerstoffangereichertes Gasgemisch mit einem Sauerstoffanteil von mehr als 21 Vol % einem zweiten Raum zugefügt. In diesem zweiten Raum herrscht somit eine Atmosphäre mit erhöhtem Sauerstoffanteil, die für bestimmte Zwecke, beispielsweise therapeutische Behandlung, gewünscht ist.

Die Raumluft mit erhöhtem Sauerstoffgehalt in dem zweiten Raum wird vorzugsweise ebenso behandelt, wie die Raumluft in dem Raum mit vermindertem Sauerstoffgehalt.

Vorzugsweise wird wenigstens eine der Eigenschaften der Umluft, wie Luftfeuchte, Lufttemperatur oder dergleichen gemessen und geregelt eingestellt.

Erfindungsgemäß wird die zuvor genannte Aufgabe auch durch einen Aufenthaltsraum des Anspruchs 12 gelöst, der so ausgebildet ist, dass er wenigstens für eine kurze Zeitdauer wenigstens einen geringen Überdruck gegenüber einer dem Aufenthaltsraum umgebenden Außenatmosphäre halten kann. Der Aufenthaltsraum ist über eine Lufteinlass- und über eine Luftauslassöffnung mit einer Raumluftantage verbunden, die ausgebildet ist, die Raumluft in dem Aufenthaltsraum so einzustellen, dass deren Sauerstoffpartialdruck kleiner ist als der Sauerstoffpartialdruck der Außenatmosphäre.

Unter einem Aufenthaltsraum, der wenigstens für eine kurze Zeitdauer wenigstens einen geringen Überdruck gegenüber einer dem Aufenthaltsraum umgebenden Außenatmosphäre halten kann, wird im Sinne dieser Erfindung ein Aufenthaltsraum verstanden, der während des Betriebes ausreichend dicht ist, um ein Leckrate zu gewährleisten, die kleiner als 10% ist und vorzugsweise unter 5% liegt. Als Leckrate wird hier das Verhältnis von einem Leckvolumenstrom zu einem dem Aufenthaltsaum im Betrieb zugeführten Gesamtvolumenstrom bezeichnet Der aus dem Aufenthaltsraum austretende Gesamtvolumenstrom umfasst neben dem bereits genannten Leckvolumenstrom auch einen Umluftvolumenstrom. Dies ist jener Raumluftanteil, der gezielt aus dem Aufenthaltsraum abgeführt wird, um im Umluftverfahren wiederaufbereitet zu werden.

Vorzugsweise sind in dem Aufenthaltsraum Sensoren zum Erfassen der Sauerstoff-konzentration bzw. des Sauerstoffpartialdrucks, der Kohiendioxidkonzentration bzw. des Kohlendioxidpartialdrucks und der Luftfeuchte, Luftqualität, Ozon sowie der Lufttemperatur vorgesehen.

Eine Raumluftanlage zur Lösung der zuvor genannten Aufgabe umfasst einen Umluftkanal sowie wenigstens eine Pumpe oder ein Gebläse zum Bewegen der Umluft in dem Umluftkanal. Der Umluftkanal ist Ober Ein- und Auslassöffnungen mit einem Aufenthaltsraum der vorgenannten Art zu verbinden. In den Umluftkanal geschaltet ist eine Mischkammer, die zum einen Lufteinlass und einen Luftauslass für die Umluft besitzt sowie zum anderen einen Einlass für Frischluft aus der Außenatmoshäre und einen Stickstoffeinlass für die Zufuhr von Stickstoff in die Mischkammer.

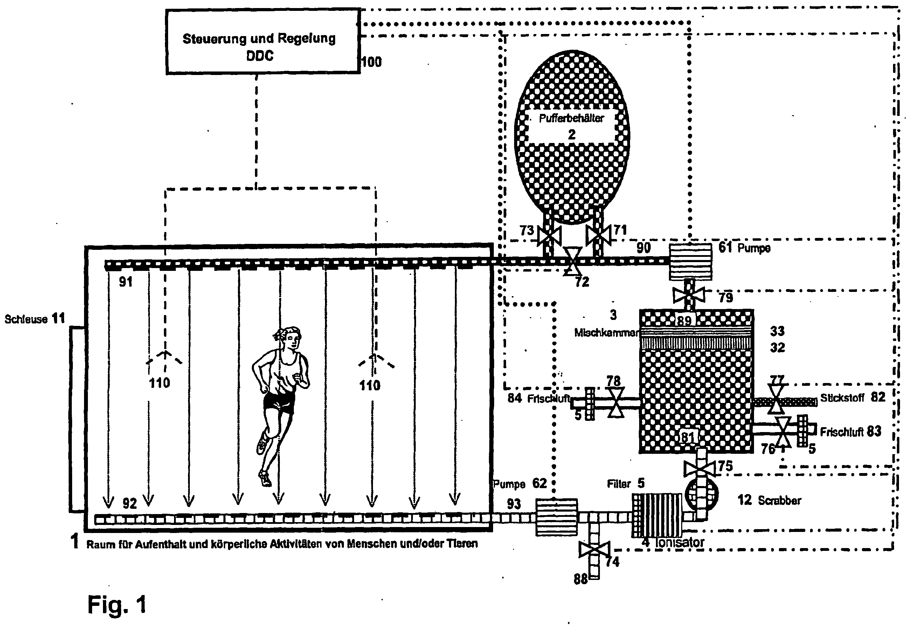

Die wesentlichen Eigenschaften und Vorteile des erfindungsgemäßen Verfahrens und der erfindungsgemäßen Raumluftanlage sind im folgenden zusammengefasst:
- Die einer simulierten Höhe entsprechende Sauerstoffkonzentration in Trainings-und Aufenthaltsräumen wird entsprechend der Aufgabenstellung auf vorgegebene Größen mit geringer Toleranz zeitnah gesteuert und geregelt;
- Vorgesehene Konzentrationsänderungen lassen sich zeitlich rasch und effektiv vornehmen;
- Die Kohlendioxidkonzentration in Trainings- und Aufenthaltsräumen ist stabil unterhalb festgelegter Grenzwerte mindestens aber unter 0,65 Vol % zu halten;
- Die zugeführte Gasgemischvolumenmenge kann flexibel den Erfordernissen angepasst werden;
- Die Luftqualität wird permanent aufrechterhalten;
- Die hypoxische Atmosphäre im Raum wird über die Zufuhr von zwei Komponenten - Stickstoff (Stickstoffgehalt größer als 78 Vol % maximal 100 Vol %) und Frischluft (Sauerstoffgehalt 20,9 Vol %) - erzeugt, die separat hergestellt bzw. der Außenluft oder auch teilweise der Raumluft selbst entnommen und volumenstromgesteuert zugeführt werden;
- Der Stickstoff wird wahlweise von einer industriell verwendeten Luftzerlegungsanlage (mittels unterschiedlicher Verfahren) vor Ort in variabler Menge (Luftzerlegungsanlage mit angeschlossenem Puffer) erzeugt oder über Tanks bereitgestellt; Die Länge der Stickstoffleitung zwischen der Luftzerlegungsanlage und der Mischkammer kann so variiert werden, dass keine zusätzlichen Schallbelastungen im Bereich des Hypoxieraumes auftreten;
- Die erforderliche Zusammensetzung des Gasgemischs wird vor dessen Einleitung in den Raum in einer diesem vorgeschalteten Mischkammer erzeugt (siehe Figur 1);
- Die separate Erzeugung der Einzelkomponenten Stickstoff und Frischluft sowie ihre geregelte Zuführung Ober elektronisch gesteuerte Ventile ermöglicht durch die Abschaltung einer Komponente bei gleichzeitiger Erhöhung des Volumenstroms der anderen Komponente entweder einen raschen Anstieg der Äquivalenthöhe (Verringerung der Sauerstoff-konzentration im Raum durch alleinige Zuführung von Stickstoff) oder eine rasche Abnahme der Äquivalenthöhe (Erhöhung der Sauerstoff-Konzentration durch alleinige Zugabe von Frischluft); Die Zeitspanne zur Herstellung der gewünschten Äquivalenthöhe kann dadurch gegenüber der Zuleitung eines konstanten Gasgemischs in der gewünschten Endkonzentration auf einen Bruchteil verkürzt werden, und die Kosten für die Herstellung der Äquivalenthöhe sinken ebenfalls beträchtlich. Die Äquivalenzhöhe ist die Höhe über dem Meeresspiegel, in der die Atemluft etwa den gleichen Sauerstoffpartialdruck aufweist, wie in dem Aufenthaltsraum.
- Die variable Steuerbarkeit der Teilvolumenströme und dadurch des Gesamtvolumenstroms an zugeführtem hypoxischen Gasgemisch aus der Mischkammer gestattet es, bei einer Erhöhung der Anzahl an Personen im Raum oder bei einer Intensitätserhöhung der körperlichen Belastung sofort den Gasgemischvolumenstrom zu vergrößern und damit einen Anstieg der Kohlendioxidkonzentration zu verhindern;
- Eine mikroelektronische Steuerung und Regelung (z.B. DDC) gestattet es, die Teilvolumenströme so zu regeln, dass Störgrößeneinflüsse unmittelbar kompensiert werden und eine konstante Sauerstoffkonzentration gewährleistet wird. Der Sauerstoffverbrauch von passiv und aktiv im Raum befindlichen Personen wird durch die entsprechende Zugabe von Frischluft ausgeglichen. Frischlufteinbrüche, durch das Betreten und Verlassen des Raumes werden durch Reduzierung des Frischluftvolumen-stroms ausgesteuert.
   Mit Zunahme der Kohlendioxidkonzentration im Raum über den festgelegten Grenzwert wird der Gesamtvolumenstrom automatisch über die Erhöhung beider Teilkomponentenvolumenströme vergrößert. Der erhöhte Volumenstrom bewirkt einen verstärkten Luftwechsel im Raum und dadurch auch eine Verringerung der Kohlendioxidkonzentration; Der Volumenstrom wird so lange erhöht, bis sich die Kohlendioxid-konzentration wieder unterhalb der vorgegebenen Grenzwerte befindet.
- Der vorgesehene Luftwechsel (Größe des Gasgemischvolumenstroms) allein sichert noch nicht die angestrebte Luftqualität. Diese wird durch ein zusätzlich im Hypoxieraum installiertes Umluftsystem und die geregelte ionisation im Umluftkreislauf erreicht. In diesem System, das die im Hypoxieraum befindliche Luft über Spezialfilter und gereglten lonisator leitet und in den Raum zurückführt, werden vorrangig Schweiß und andere Schadstoffe (Keime) eliminiert. Der Luftwechsel durch einströmendes Gasgemisch und ausströmendes Gasgemisch dient vorwiegend der Reduzierung der Kohlendioxidkonzentration;

Die Erfindung soll nun anhand der beigefügten Zeichnung näher erläutert werden. Die Zeichnung zeigt in:
- Figur 1:: einen Aufenthaltsraum mit daran angeschlossener Raumluftanlage zum Erzeugen und Regeln einer hyperbaren hypoxischen Atmosphäre in dem Aufenthaltsraum; und in
- Figur 2:: ein Schema für die Zu- und Ableitung des Gasgemisches in und aus dem Aufenthaltsraum
- Figur 3:: einen Aufenthaltsraum mit daran angeschlossener, alternativer Raumluftanlage, die mit einer Luftseparationseinheit zum Erzeugen eines stickstoffhaltigen Gasgemisches zusammenwirkt; in
- Figur 4:: einer Anordnung von zwei Aufenthaltsräumen die mit einer Raumluftanlage und einer gemeinsamen Separationseinheit derart verbunden sind, dass ein Aufenthaltsraum sauerstoffreduzierter Raumluft und der andere Aufenthaltsraum sauerstoffangereicherter Raumluft enthält; in
- Figur 5:: drei grobschematische Ansichten eines Aufenthaltsraumes mit vermindertem Sauerstoffgehalt und Wasserbecken; und in
- Figur 6:: einen hypoxischen Aufenthaltsraum mit einer Eisfläche oder Schneepiste, und zwar in Fig. 6a eine Aufsicht auf eine elliptische Eisbahn und in Fig. 6b einen Querschnitt durch einen Tunnel für die elliptische Eisbahn.

Die Hypoxieanlage gemäß Figur 1 umfasst folgende Bestandteile: einen Aufenthaltsraum - im folgenden Raum 1 genannt - für Aufenthalt und körperliche Aktivitäten von Menschen und/oder Tieren, einen Pufferbehälter 2, eine Mischkammer 3, eine Luftfeuchte-Bearbeitungseinheit 32, eine Temperatur-Bearbeitungseinheit 33, einen geregelten lonisator 4, einen Partikelfilter 5, eine erste Pumpe 61, eine zweite Pumpe 62, elektronisch oder anders regelbare Durchflussventile (MFC oder andere) 71 bis 79, einen Einlass für gebrauchte Raumluft 81, einen Einlass 82 für Stickstoff, einen ersten Einlass 83 für Frischluft, einen zweiten Einlass 84 für Frischluft, einen Auslass 88 für gebrauchte Raumluft, einen Mischkammer-Auslass 89, eine Verbindungsleitung 90, einen Verteiler 91 für frisch gemische Raumluft, einen Aufnehmer und Ableiter 92 für gebrauchte Raumluft, einen zweite Verbindungsleitung 93, einen Scrabber 12 für die chemische Elimination von Kohlendioxid, eine 100 Zentraleinheit für eine elektronische Steuerung und Regelung (DDC oder andere) und Sensoren 110 für Sauerstoff, Kohlendioxid, Wasserdampf, Temperatur, Luftdruck, Luftgüte und Ozon.

Die Begriffe Raumluft und Atmosphäre werden im folgenden als Synonyme behandelt und betreffen die Luft in dem Raum 1 und der dazugehörigen Raumluftanlage. Zu unterschieden ist die dem Raum 1 umgebende Außenatmosphäre, die von Frischluft gebildet ist.

Der Betrieb der Hypoxieanlage gemäß Figur 1 verläuft wie folgt:
Die Anlage dient entweder der Herstellung einer sauerstoffreduzierten (<20,9 Vol %) und kohlendioxidarmen Atmosphäre (< 0,04 Vol %) in einem geschlossenen oder fast geschlossenen Raum 1 und/oder der Regelung einer sauerstoffreduzierten (<20,9 Vol %) und kohlendioxidarmen Atmosphäre (<festgelegter Grenzwert) in einem geschlossenen oder fast geschlossenen Raum 1 beim Aufenthalt mit oder ohne körperlicher Aktivität von Menschen und/oder Tieren.

Als passiver Betrieb wird die im folgenden beschriebene Herstellung einer sauerstoffreduzierten Atmosphäre bezeichnet.

Die Herstellung einer sauerstoffreduzierten (<20,9 Vol %) und kohlendioxidarmen Atmosphäre (< 0,04 Vol %) in dem geschlossenen oder fast geschlossenen Raum 1, erfolgt in einem passiven Betrieb wie folgt: Durch Öffnen der Ventile 77, 79 und 72 wird Stickstoff (Vol % N₂ > 78; O₂ < 20,9; CO₂ < 0,04; H₂O gegen 0) über den Einlass 82 mit Hilfe der Pumpe 61 oder durch den Eigendruck des Stickstoffs, wenn dieser aus einem Druckbehälter entnommen wird, über die Verbindung 90 und spezielle Lüftungskanäle 91, die eine gleichmäßige Vermischung des Stickstoffs mit der jeweils im Raum befindlichen Atmosphäre gewährleisten, in den geschlossenen oder fast geschlossenen Raum 1 geleitet. Mittels der Pumpe 62 oder mit Hilfe erhöhten Drucks im Raum 1 wird durch geregeltes Öffnen des Ventils 74 bei geschlossenem Ventil 75 Ober spezielle Lüftungskanäle 92, die eine gleichmäßige Absaugung der neu gemischten Raumatmosphäre gewährleisten, nur so viel Raumatmosphäre über den Ausgang 88 in die Umgebungsatmosphäre abgeleitet, dass im Raum ein Überdruck erhalten bleibt. Dieser Prozess wird so lange aufrechterhalten, bis im Raum 1 die gewünschte sauerstoffreduzierte (<20,9 Vol %) und kohlendioxidarme Atmosphäre (< 0,65 Vol %) vorliegt.

Die zur Herstellung alternative oder ergänzende Regelung einer sauerstoffreduzierten (<20,9 Vol %) und kohlendioxidarmen Atmosphäre (<festgelegter Grenzwert, z. B. 1 Vol% oder 0,65 Vol%) in einem geschlossenen oder fast geschlossenen Raum 1 beim Aufenthalt und/oder körperlicher Aktivität von Menschen oder Tieren geschieht in einem aktiven Betrieb entweder in einem teilgeschlossenen Umluftsystem oder in einem geschlossenen Umluftsystem.

Zunächst wird der aktive Betrieb - die Regelung der Atmosphäre - in einem teilgeschlossenen Umluftsystem beschrieben.

Die Regelung einer sauerstoffreduzierten (<20,9 Vol %) und kohlendioxidarmen Atmosphäre (<festgelegter Grenzwert, z.B. 1 Vol% oder 0,65 Vol%) in einem geschlossenen oder fast geschlossenen Raum 1 beim Aufenthalt und/oder körperlicher Aktivität von Menschen oder Tieren, geschieht im aktiver Betrieb in einem teilgeschlossenen Umluftsystems wie folgt: Der Umluftkreislauf wird komplett in Gang gesetzt. Das Ventil 75 wird geöffnet, so dass die abgesaugte Atmosphäre aus dem Raum 1 durch einen Partikelfilter 5 und einen geregelten Ionisator 4, der alle Schadstoffe auf Kohlenwasserstoffbasis aus der Atmosphäre entfernt, über den Einlass 81 in die Mischkammer 3 gelangt. Wahlweise kann ein Scrabber 12, der Kohlendioxid durch chemische Bindungen aus der Atmosphäre eliminiert, in den Luftstrom zwischengeschaltet werden. Über den Einlass 82 werden Stickstoff und Ober den Einlass 83 Umgebungsluft, nachfolgend als Frischluft bezeichnet, die einen Partikelfilter 5 passiert, in einem Volumenverhältnis zueinander, das dem der gewünschten reduzierten Sauerstoff-konzentration im Raum 1 entspricht, in die Mischkammer geleitet. Über den Einlass 84 wird eine weitere Menge Frischluft über einen Partikelfilter 5 In die Mischkammer geleitet. Diese Menge Frischluft gleicht den Sauerstoffverbrauch der sich im Raum 1 befindlichen Menschen oder Tiere aus. Sie steht in einem bestimmten Verhältnis zur Bewegungsintensität der sich im Raum 1 befindlichen Menschen oder Tiere und wird über die Dynamik des Sauerstoffverbrauchs im Raum 1 festgelegt und automatisch geregelt. Dabei muss die in der Frischluftmenge enthaltene Sauerstoffmenge größer als die verbrauchte Sauerstoffmenge sein. Das Volumen aus Stickstoff (Einlass 82) und Frischluft (Einlässe 83 und 84) entspricht dabei der Summe der Voiumenmenge verbrauchter Atmosphäre, die vorher über den Ausgang 85 in die Umgebungsatmosphäre abgeleitet wurde und dem Volumen der Menge an verbrauchter Atmosphäre, das durch bestehende Lecks ständig bzw. durch Störungen wie dem Ein- und Ausschleusen von Personen oder Tieren in und aus dem Raum 1 aus dem Kreislauf in die Umgebungsatmosphäre entweicht. Die Volumenmenge, die an die Umgebungsatmosphäre abgeleitet bzw. durch Vermischen von Stickstoff- und Frischluft neu hergestellt wird, wird über die Dynamik der Kohlendioxidkonzentration und der festgelegten Grenzkonzentrationen von Kohlendioxid im Raum 1 festgelegt und automatisch so geregelt, dass ein Gleichgewicht (steady state) vorliegt bzw. festgelegte Grenzwerte nicht überschritten werden. Die in der Mischkammer gefertigte sauerstoffreduzierte (<20,9 Vol %) und kohlendioxidarme Atmosphäre (<festgelegter Grenzwert, z.B. 1 Vol% oder 0,65 Vol%) aus aufbereiteter gebrauchter Atmosphäre und Neuanteilen von Stickstoff und Frischluft wird vor Verlassen der Mischkammer 3 klimatechnisch so bearbeitet, dass die gewünschte Temperatur und Luftfeuchte im Raum 1 stabil vorliegt. Zusätzlich kann im Raum 1 eine weitere klimatechnische Bearbeitung der Atmosphäre erfolgen. Von der Mischkammer wird die aufbereitete Atmosphäre durch den Auslass 89 und das Ventil 72 mit Hilfe der Pumpe 62 oder durch den Eigendruck der aufbereiteten Atmosphäre entweder über einen Pufferbehälter 2, der die aufbereitete Atmosphäre speichern kann, oder direkt über die Verbindungsleitung 90 und spezielle Lüftungskanäle 91, die eine gleichmäßige Vermischung des Stickstoffs mit der jeweils im Raum befindlichen Atmosphäre gewährleisten, in den geschlossenen oder fast geschlossenen Raum geleitet. Durch geregeltes Öffnen der Ventile 74 und 75 wird mittels der Pumpe 62 oder dem vorliegenden erhöhten Druck im Raum über spezielle Lüftungskanäle 92, die eine gleichmäßige Fortleitung der gebrauchten Raumatmosphäre gewährleisten, so viel Raumatmosphäre über den Auslass 88 in die Umgebungsatmosphäre abgeleitet, wie es zum Einhalten der vorgegebenen Grenzwerte für die Kohlendioxidkonzentration im Raum 1 und den Erhalt eines Überdrucks im Raum erforderlich ist. Die gebrauchte Raumatmosphäre, welche um den Volumenteil, der durch den Auslass 88 an die Umgebungsatmosphäre abgeleitet wurde, reduziert ist, wird über den Partikelfilter 5 und den geregelten Ionisator 4 zur erneuten Bearbeitung in die Mischkammer geleitet wird. Optional kann die restliche gebrauchte Raumatmosphäre über einen Scrabber 12 zur zusätzlichen Eliminierung von Kohlendioxid geführt werden. Der Mischvorgang in der Mischkammer 3 kann unter geringem Überdruck, großem Überdruck oder Unterdruck erfolgen. Beim Mischen von sauerstoffreduzierter (<20,9 Vol %) und kohlendioxidarmer Atmosphäre (<festgelegter Grenzwert, z.B. 1 Vol% oder 0,65 Vol%) mit geringem überdruck werden die Komponenten gebrauchte Atmosphäre, Stickstoff und Frischluft mit einem Druck, der über dem Druck der Atmosphäre im Raum 1 liegt, in die Mischkammer gegeben und der Druck der neu gefertigten Atmosphäre über das Ventil 79 und die Zuleitungen 90 und 91 so reduziert, dass der im Raum 1 herrschende Druck konstant bleibt. Beim Mischen mit Unterdruck wird sauerstoffreduzierte (<20,9 Vol %) und kohlendloxidarme Atmosphäre (<festgelegter Grenzwert, z.B. 1 Vol% oder 0,65 Vol%) diskontinuierlich erzeugt und über den Puffer kontinuierlich in den Raum 1 geleitet. Die Pumpe 61 entzieht der Mischkammer über das Ventil 79 gefertigte Atmosphäre, während die Ventile 75, 76, 77 und 78 geschlossen sind. Durch darauffolgendes geregeltes Öffnen dieser Ventile werden zeitlich und mengenmäßig differenziert die Komponenten gebrauchte Atmosphäre, Stickstoff und Frischluft geregelt in die Mischkammer geleitet und zu neuer Atmosphäre verarbeitet. Mit dem Schließen der Ventile 75, 76, 77 und 78 wiederholt sich dieser Prozess. Die Pumpe 61 fördert die gefertigte Atmosphäre in den Pufferbehälter, Ober den eine geregelte kontinuierliche Abgabe dieser gefertigten Atmosphäre mittels der speziellen Lüftungskanäle 91 erfolgt. Beim Mischen mit großem Überdruck wird sauerstoffreduzierte (<20,9 Vol %) und kohlendioxidarme Atmosphäre (<festgelegter Grenzwert, z. B. 1 Vol% oder 0,65 Vol%) diskontinuierlich erzeugt und Ober den Puffer kontinuierlich in den Raum 1 geleitet. Die Komponenten gebrauchte Atmosphäre, Stickstoff und Frischluft werden über die Einlässe 81, 82, 83 und 84 mit großem Überdruck zeitlich und mengenmäßig differenziert in die Mischkammer geleitet während das Ventil 79 geschlossen ist. Nach Schließen der Ventile 75, 76, 77 und 78 wird das Ventil 79 geöffnet. Mit dem Schließen des Ventils 79 wiederholt sich dieser Prozess. Die Pumpe 61 fördert die gefertigte Atmosphäre in den Pufferbehälter, über den eine geregelte kontinuierliche Abgabe dieser gefertigten Atmosphäre mittels der speziellen Lüftungskanäle 91 erfolgt. Die Art der Vermischung - mit geringem Überdruck, großem Überdruck oder Unterdruck - beeinflusst die Qualität der hergestellten Atmosphäre und wird in Abhängigkeit von der gewünschten Zusammensetzung der Atmosphäre im Raum 1, dem erforderlichen Volumenstrom und den vorliegenden Störgrößen bestimmt.

Nun wird der aktive Betrieb für ein geschlossenes Umluftsystem beschrieben.

Die Regelung einer sauerstoffreduzierten (<20,9 Vol %) und kohlendioxidarmen Atmosphäre (<festgelegter Grenzwert, z.B. 1 Vol% oder 0,65 Vol%) in einem geschlossenen oder fast geschlossenen Raum 1 beim Aufenthalt und/oder körperlicher Aktivität von Menschen oder Tieren, geschieht im aktiven Betrieb in einem geschlossenen Umluftsystem wie folgt: Der Umluftkreislauf wird komplett mit Hilfe der Pumpen 61 und 62 in Gang gesetzt. Das Ventil 74 wird geschlossen und das Ventil 75 wird geöffnet, so dass die abgesaugte Atmosphäre aus dem Raum 1 durch einen Partikelfilter 5 und einen geregelten lonisator 4, der alle Schadstoffe auf Kohlenwasserstoffbasis aus der Atmosphäre entfernt, über den Einlass 81 in die Mischkammer 3, die Verbindungsleitung 90 und die speziellen Lüftungskanäle 91 zurück in den Raum 1 gelangt. Wahlweise kann ein Scrabber 12, der Kohlendioxid durch chemische Bindungen aus der Atmosphäre eliminiert, in den Luftstrom zwischengeschaltet werden. Das geschlossene System kann solange betrieben werden, wie Grenzwerte der Kohlendioxidkonzentration nicht überschritten werden und die Sauerstoffkonzentration ihre Normbereiche nicht verlässt. Diese Bedingungen sind bei sehr großen Raumvolumen gegeben. Nach Erreichen der Grenzwerte kann entweder die Atmosphäre komplett ausgetauscht werden oder das Verfahren wird auf den Betrieb eines teilgeschlossenen Umluftsystems umgestellt.

Für alle Betriebsarten werden alle Hardwarekomponenten über eine zentrale mikroelektronische Steuereinheit in Form einer DDC - Anlage gesteuert und mit Hilfe von Sensoren für die Sauerstoff-, Kohlendioxid-, Wasserdampf- und Schadstoffkonzentration sowie für die Volumenströme gebrauchte Atmosphäre, Stickstoff, Frischluft und gefertigte Atmosphäre sowie die Temperatur im Raum 1 werden auf die gewünschten Sollwerte geregelt.

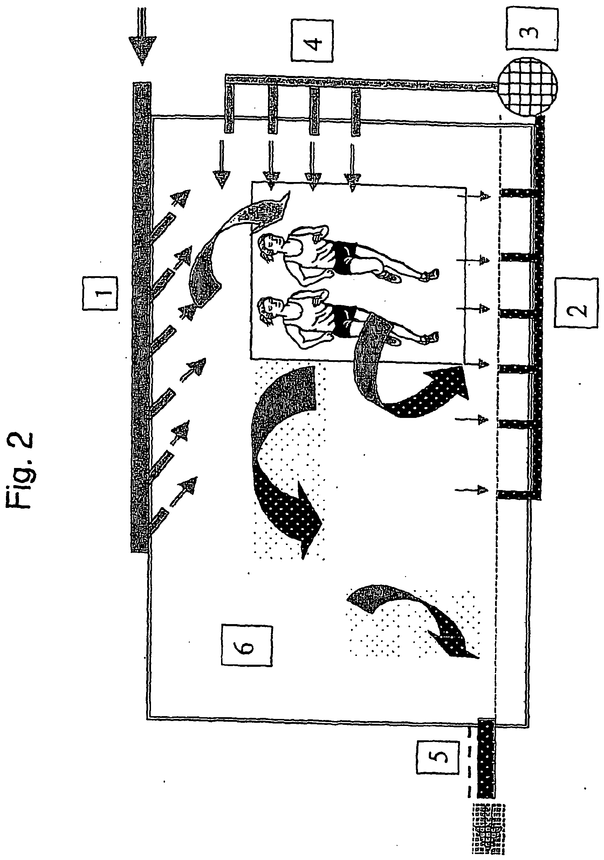

Figur 2 zeigt die Be- und Entlüftung des Raums 1. Von den Bezugzeichen zeigen:
1 - eine Gasgemischzuleitung mit variablem Volumenstrom und schräg nach vom gerichteten Ausströmöffnungen
2 - eine bodennahe Absaugung des Umluftsystems
3 - eine Schadstoffbeseitigungsanlage im Umluftsystem
4 - Ausströmöffnungen für das gereinigte und kohlendioxidangereicherte Gasgemisch
5 - eine Absaugleitung mit steuerbar variablem Querschnitt
6 - den Trainings- oder Aufenthaltsraum unter Hypoxie

Für die Zu- und Ableitung des Gasgemischs wird eine Zwangsführung vorgesehen. Die Gasgemischmenge, die entsprechend der Erfordernisse variiert, wird mit einem geringen Überdruck von der Decke aus schräg nach unten (Figur 2) eingeblasen. Nachdem sie die trainierenden Personen passiert hat, wird sie von einem bodennahen Umluftsystem, welches die entstandene Mischatmosphäre von Schadstoffen säubert, angesaugt und von den Front- und Seitenwänden zum weiteren Gebrauch wieder so in den Raum geblasen, dass eine nach hinten gerichtete Luftbewegung entsteht. An der Rückseite des Raumes wird mit einem leichten Unterdruck, der dem Überdruck beim Einblasen entspricht, die gleiche Menge Luft aktiv abgesaugt. Die walzenförmige Luftbewegung durch den Raum gewährleistet einen besseren Abtransport des kohlendioxidbelasteten Gasgemischs als beim diffusen Austritt durch unterschiedlich vorgegebene Öffnungen. Sich flexibel der einströmenden Gasgemischmenge anpassende Absaugöffnungen (Querschnitt) für das verbrauchte Gasgemisch ermöglichen den laufenden Betrieb mit unterschiedlicher und wechselnder Personenzahl.

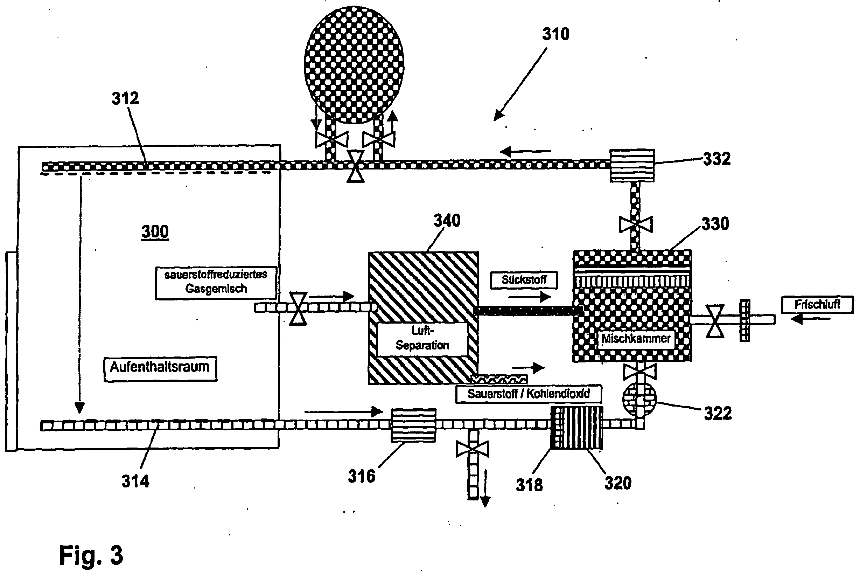

Die in Figur 3 dargestellte Anordnung von Aufenthaltsraum 300 und Raumluftanlage 310 unterscheidet sich vor allem hinsichtlich der Raumluftanlage 310 von der in Figur 1 dargestellten Raumluftanlage. Gemeinsame Bestandteile sind eine Luftzuführung 312 und eine Luftabsaugung 314 in dem Aufenthaltsraum 300. Die aus dem Aufenthaltsraum 300 abgeführte Raumluft wird über eine Pumpe 316, einen Ionisator 318 und Filter 320, einen Scrabber 322, eine Mischkammer 330 und eine zweite Pumpte 332 im Umluftbetrieb der Luftzuführung 312 in dem Aufenthaltsraum 300 wieder zugeführt. Soweit und auch bezüglich der hier nicht näher dargestellten Ventile etc. unterscheidet sich die Umluftanlage aus Figur 3 nicht von derjenigen aus Figur 1. Auch bezüglich der Tatsache, dass der Mischkanal 330 Frischluft und stickstoffhaltiges Gasgemisch oder Stickstoff zugeführt wird, besteht Gemeinsamkeit. Gleiches gilt für einen Pufferbehälter 334 zum eventuell erforderlichen Druckausgleich. Sämtliche Ventile sind mit einer in Figur 1 dargestellten Steuerung und Regelung DDC verbunden, die außerdem mit Sensoren in dem Aufenthaltsraum 300 verbunden ist.

Die in Figur 3 dargestellte Anordnung aus Aufenthaltsraum 300 und Umluftanlage 310 unterscheidet sich jedoch von der in Figur 1 dargestellten Anordnung wesentlich dadurch, dass zum Erzeugen des Stickstoffes oder des stickstoffhaltigen Gasgemisches, welches der Mischkammer 330 zugeführt wird, eine Luftseparationseinheit 340 vorgesehen ist. Diese Luftseparationseinheit 340 ist eingangsseitig über eine Leitung 342 derart mit dem Aufenthaltsraum 300 verbunden, dass die Separationseinheit 340 Raumluft aus dem Aufenthaltsraum 300 aufnimmt, diese Luft in einen stickstoffangereicherten Anteil und einen Sauerstoff- und kohlendioxidangereicherten Anteil auftrennt und den stickstoffangereicherten Gasanteil der Mischkammer 330 zuführt. Der von der Luftseparationseinheit 340 erzeugte stickstoffangereicherte Gasanteil kann dabei auch annähernd reiner Stickstoff sein, der durch Luftseparation der Raumluft aus dem Aufenthaltsraum 300 gewonnen wurde. Der seitens der Luftseparationseinheit 340 der Mischkammer 330 zugeführte stickstoffangereicherte Gasanteil wird in der Mischkammer 330 auf gleiche Art und Weise mit Frischluft gemischt, wie dies bei der Raumluftanlage gemäß Figur 1 der Fall ist.

Dass die der Luftseparationseinheit 340 zugeführte Luft die Raumluft aus dem Aufenthaltsraum 300 ist, hat den Vorteil, dass diese Raumluft bereits einen erhöhten Stickstoffantell aufweist und dass außerdem bei der Luftseparation in der Luftseparationseinheit 340 zumindest ein Teil des aus der Raumluft in dem Aufenthaltsraum 300 abzuführenden Kohlendioxid abgetrennt und nach außen geführt wird.

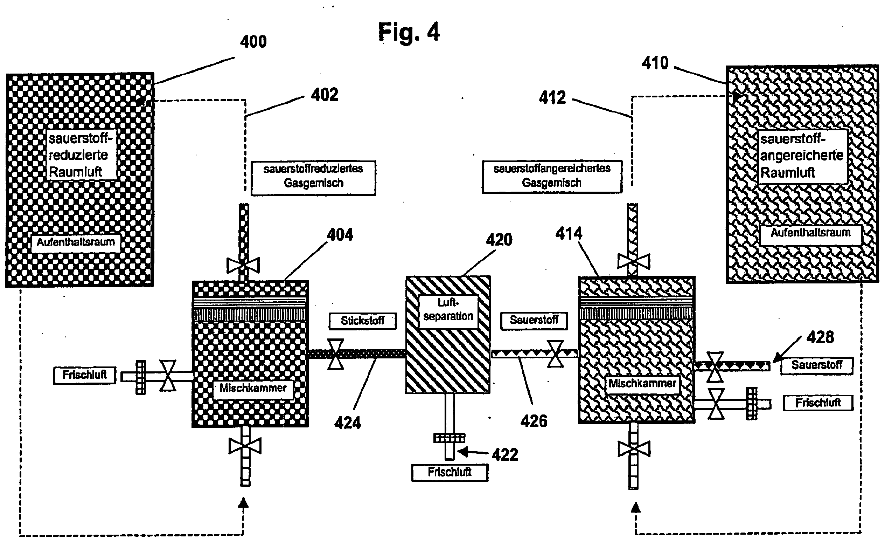

Die in Figur 4 dargestellte Anordnung mit zwei Aufenthaltsräumen, nämlich einem ersten Aufenthaltsraum 400 mit sauerstoffreduzierter Raumluft und einem zweiten Aufenthaltraum 410 mit sauerstoffangereicherter Raumluft kann bezüglich vieler Details in Bezug auf die einem jeweiligen Aufenthaltraum 400 oder 410 zugeordnete Umluftanlage der in Figur 3 dargestellten Anordnung entsprechen. Wesentlicher Bestandteil eines Umluftkreislaufes 402 für den Aufenthaltsraum 400 und eines zweiten Umluftkreislaufes 412 für den Aufenthaltsraum 410 ist jeweils eine Mischkammer 404 bzw. 414. Beide Mischkammern 404 und 414 werden aus einer Luftseparationseinheit 420 gespeist. Diese Luftseparationseinheit 420 ist eingangsseitig nicht an eine der Aufenthaltsräume angeschlossen, sondern wird mit Frischluft versorgt (Einlass 422). Das bei der Luftseparation anfallende stickstoffangereicherte Gasgemisch wird über eine Leitung 424 der Mischkammer 404 für den ersten Aufenthaltsraum 400 mit sauerstoffreduzierter Raumluft zugeführt. Das ebenfalls bei der Luftseparation anfallende sauerstoffangereicherte Gasgemisch wird über eine Leitung 426 der zweiten Mischkammer 414 für den Umluftkreislauf 412 des zweiten Aufenthaltsraumes 410 mit sauerstoffangereicherter Raumluft zugeführt.

Die Ausführung der Raumluftanlage für den ersten Aufenthaltsraum 400 mit sauerstoffreduzierter Raumluft kann dabei genau der in den Figuren 1 und 3 dargestellten Raumluftanlage entsprechen.

Bezüglich der Raumluftanlage für den zweiten Aufenthaltsraum 410 mit sauerstoffangereicherter Raumluft ergibt sich in Hinsicht auf die Mischkammer 414 ein Unterschied, der darin besteht, dass die Mischkammer statt eines einzigen Einlasses für sauerstoffangereichertes Gasgemisch, die dem Anlass für stickstoffangereichertes Gasgemisch in den Figuren 1 und 3 entsprechen würde, noch ein weiterer Einlass 428 für Sauerstoff oder sauerstoffangereichertes Gasgemisch vorgesehen ist.

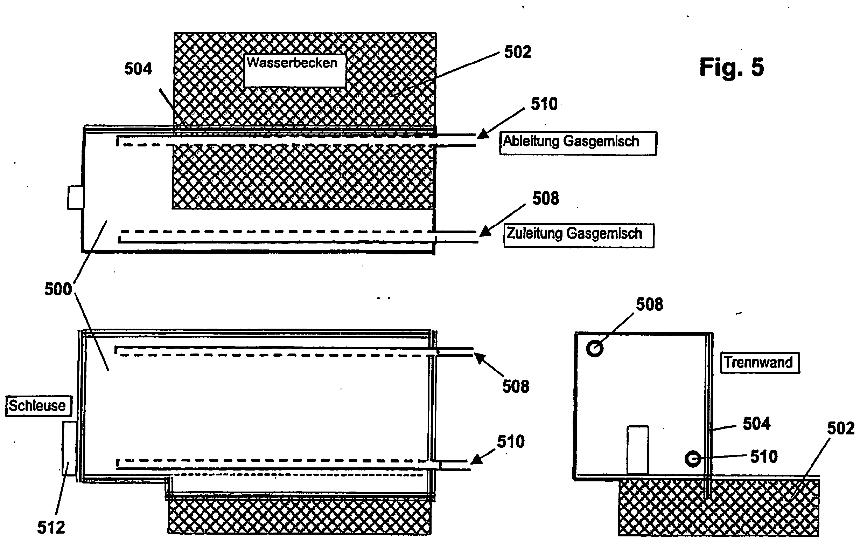

In Figur 5 ist eine besondere Variante eines Aufenthaltsraumes 500 mit sauerstoffverminderter oder sauerstoffangereicherter Atmosphäre dargestellt. Die Besonderheit des Aufenthaltsraumes 500 besteht darin, dass dieser eine in ein Wasserbecken 502 reichende Trennwand 504 aufweist, die unterhalb eines Wasserspiegels 506 endet und es erlaubt, dass sich das Wasserbecken auch außerhalb des Aufenthaltsraumes 500 erstreckt, beispielsweise in einem Nachbarraum oder auch im Freien. Die ausreichende Abdichtung des Aufenthaltsraumes 500 gegenüber der Umgebung ist durch das Wasserbecken 502 und die in das Wasserbecken 502 hineinragende Trennwand 504 gegeben. Dies erlaubt es Schwimmern durch das Wasserbecken in den Aufenthaltsraum hinein und aus ihm heraus zu tauchen.

Wie bereits in Bezug auf die Aufenthaltsräume in den Figuren 1 und 3 dargestellt, sind jeweils eine Zuleitung 508 und eine Ableitung 510 für das Zuführen sauerstoffangereicherter oder sauerstoffverminderter Raumluft und das Abführen der Raumluft vorgesehen.

Eine Eingangsschleuse 512 erlaubt den trokkenen Zugang zum Aufenthaltsraum 500 ohne größeren Luftaustausch zwischen der Raumluft im Aufenthaltsraum 500 und der Umgebungsluft.

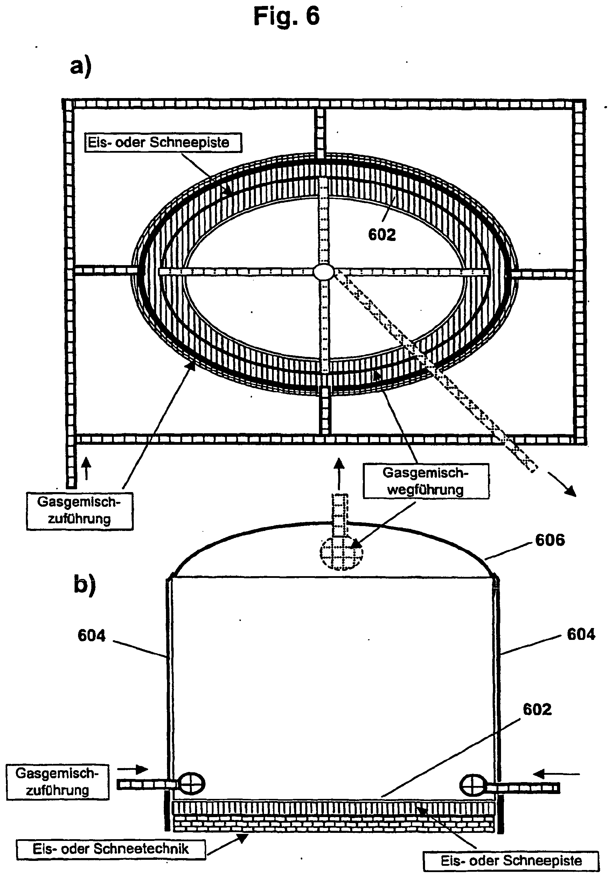

In Figur 6 ist schließlich ein Aufenthaltsraum 600 mit einer Eisfläche oder Schneepiste 602 dargestellt. Nur beispielhaft sind die Eis- oder Schneepiste 602 als eliptische Bahn dargestellt, über der der Aufenthaltsraum 600 mit sauerstoffverminderter oder sauerstoffangereicherter Raumluft durch entsprechende Raumwände 604 und eine Decke 606 begrenzt ist. Besonderes Merkmal des Aufenthaltsraumes 600 ist es, dass die Zuführung sauerstoffverminderten oder sauerstoffangereicherten Gasgemisches in Bodennähe nahe der Eis- oder Schneepiste 602 durch sich entlang der Eis- oder Schneepiste 602 erstreckende Zuleitungen 610 erfolgt. Das durch die Zuleitungen 610 zugeführte Gasgemisch kann dabei gekühlt sein und somit vorteilhafterweise das Aufrechterhalten der Eis- oder Schneepiste unterstützen.

Eine Wegführung des Gasgemisches erfolgt vorzugsweise über eine sich im Bereich der Decke 606 des Aufenthaltsraumes 600 entlang der Eis- oder Schneepiste 602 erstreckende Ableitung 612.

## Patentansprüche

1. Verfahren zum Einstellen einer Raumluft in einem ersten Raum, bei dem die Raumluft kontinuierlich oder in wiederkehrenden Zeitintervallen durch Stickstoff oder ein stickstoffhaltiges, kohlendioxydarmes Gasgemisch derart ergänzt wird, dass der Sauerstoffanteil der Raumluft weniger als 20,9 Vol.% beträgt und der Kohlendioxydanteil der Raumluft kleiner ist als 1 Vol% oder bevorzugt 0,65 Vol%, wobei in dem Raum gleichzeitig wenigstens ein geringer Überdruck gegenüber einer den Raum umgebenden Außenatmosphäre eingestellt wird, wobei die Raumluft im Umluftbetrieb als Umluft durch eine Mischkammer mit einem Lufteinlass und einem Luftauslass für Umluft sowie mit einem Einlass für Frischluft aus der Außenatmosphäre und einem Stickstoffeinlass für die Zufuhr von Stickstoff in die Mischkammern geführt wird und das Mischen des Gasgemisches in der Mischkammer durchgeführt wird, der die zu mischenden Komponenten Raumluft, Stickstoff und Frischluft des Gasgemisches in Abhängigkeit des gewünschten Gasgemisches der Mischkammer mit Über- oder Unterdruck zugeführt werden.

2. Verfahren nach Anspruch 1, **dadurch gekennzeichnet, dass** ein durch den Umluftbetrieb bewirkter Luftaustausch der Raumluft in dem Aufenthaltsraum so eingestellt wird, dass in dem Aufenthaltsraum eine homogene Atmosphäre herrscht.

3. Verfahren nach Anspruch 1, **dadurch gekennzeichnet, dass** ein Kohlendioxyd-anteil der Raumluft im Umluftbetrieb durch Ersetzen eines Anteils der Raumluft durch kohlendioxydarme Luft der Außenatmosphäre mit normalem Sauerstoffanteil so ersetzt wird, wobei der Anteil der im Umluftbetrieb ausgetauschten Raumluft so eingestellt wird, dass die Raumluft eine Kohlendioxydkonzentration unterhalb festgelegter Grenzwerte bis 0,65 Vol.% behält.

4. Verfahren nach Anspruch 1, dass der Kohlendioxidanteil der Umluft zusätzlich auf chemischem Wege, z.b. mittels Kalk gesenkt wird.

5. Verfahren nach Anspruch 1, **dadurch gekennzeichnet, dass** die im Umluftbetrieb geführte Raumluft durch geregelte Ionisation bedarfsgerecht so behandelt wird, dass die Raumluft mit gegenüber der Außenatmosphäre vermindertem Sauerstoffanteil und niedrigem Kohlendioxidgehalt über mehrere Umluftzyklen eine Luftqualität beibehält, die nicht wesentlich von der Qualität der Außenatmosphäre abweicht.

6. Verfahren nach Anspruch 1, **dadurch gekennzeichnet, dass** das Gasgemisch aus Luft der Außenatmosphäre und Stickstoff gemischt wird.

7. Verfahren nach Anspruch 1, **dadurch kennzeichnet, dass** wenigstens eine der Eigenschaften der Umluft wie Luftfeuchte, Lufttemperatur oder dergleichen gemessen und geregelt eingestellt wird.

8. Verfahren nach einem der Ansprüche 1 bis 5, **dadurch gekennzeichnet, dass** das stickstoffhaltige Gasgemisch durch Lufttrennung mittels einer Separationsanlage erzeugt wird, der die Raumluft im Umluftbetrieb zugefügt wird, und bei dem der Umluft außerdem Umgebungsluft oder Stickstoff oder ein stickstoffhaltiges Gasgemisch in einer Menge zugemischt wird, die einem Äquivalent der bei der Lufttrennung anfallenden Abluft mit erhöhten Sauerstoffgehalt entspricht.

9. Verfahren nach Anspruch 1, **dadurch gekennzeichnet, dass** das stickstoffhaltige Gasgemisch durch Lufttrennung aus Umgebungsluft hergestellt wird.

10. Verfahren nach Anspruch 9, **dadurch gekennzeichnet, dass** ein bei der Lufttrennung anfallendes sauerstoffangereichertes Gasgemisch mit einem Sauerstoffanteil von mehr als 21 Vol.% einem zweiten Raum zugefügt wird, so dass die Raumluft in dem zweiten Raum einen gegenüber der Umgebungsluft erhöhten Sauerstoffgehalt aufweist.

11. Verfahren nach Anspruch 10, **dadurch gekennzeichnet, dass** die Raumluft mit erhöhtem Sauerstoffgehalt in dem zweiten Raum gemäß einem der Ansprüche 1 bis 10 behandelt wird.

12. Aufenthaltsraum für Menschen oder Tiere, insbesondere Sportübungsraum, der mit Raumluft gefüllt und ausgebildet ist, wenigstens für eine kurze Zeitdauer wenigstens einen geringen Überdruck gegenüber einer den Aufenthaltsraum umgebenden Außenatmosphäre zu halten, wobei der Aufenthaltsraum über eine Lufteinlass- und eine Luftauslassöffnung mit einer Raumluftanlage verbunden ist, die ausgebildet ist, die Raumluft in dem Aufenthaltsraum so einzustellen, dass deren Sauerstoffpartialdruck kleiner ist als der Sauerstoffpartialdruck der Außenatmosphäre, wobei die Raumluftanlage einen Umluftkanal und eine Pumpe oder ein Gebläse zum Bewegen von Umluft in dem Umluftkanal sowie eine in dem Umluftkanal geschaltete Mischkammer mit einem Lufteinlass und einem Luftauslass für die Umluft sowie mit einem Einlass für Umgebungsluft aus der Außenatmosphäre und einem Stickstoffeinlass für die Zufuhr von Stickstoff in die Mischkammer aufweist.

13. Aufenthaltsraum für Menschen oder Tiere, insbesondere Sportübungsraum nach Anspruch 12, **dadurch gekennzeichnet, dass** die Raumluftanlage über eine Lufttrenneinheit zur Trennung von Umgebungsluft in ein erstes Gasgemisch mit gegenüber der Umgebungsluft vermindertem Sauerstoffanteil und ein zweites Gasgemisch mit gegenüber der Umgebungsluft erhöhtem Sauerstoffanteil verfügt.

14. Aufenthaltsraum für Menschen oder Tiere, insbesondere Sportübungsraum nach Anspruch 13, **dadurch gekennzeichnet, dass** dem Sportübungsraum ein zweiter Sportübungsraum angegliedert ist, welcher mit der Raumluftanlage derart verbunden ist, dass das Gasgemisch der Lufttrenneinheit, welches gegenüber der Umgebungsluft einen erhöhten Sauerstoffanteil aufweist, zur Herstellung einer Atmospäre mit gegenüber der Umgebungsluft erhöhtem Sauerstoffanteil im zweiten Sprortübungsraum verwendet wird.

## Claims

1. Method of adjusting the air in a first room, whereby the air in the room is supplemented continually or at repeated intervals with nitrogen or a nitrogen-containing, carbon dioxide-poor gas mixture, such that the proportion of oxygen in the room is less than 20.9% by volume and the proportion of carbon dioxide in the room is less than 1% by volume, or preferably 0.65 % by volume, whereby in the room at the same time a level of overpressure is adjusted in the room which is lower than the surrounding external atmosphere, whereby the room air in the recirculation system is supplied as recirculated air through a mixing chamber with an air inlet and an air outlet for recirculated air and an inlet of fresh air from the external atmosphere and a nitrogen inlet for supplying nitrogen into the mixing chamber and the gas is mixed together in the mixing chamber, into which the components room air, nitrogen and fresh air of the gas mixture to be mixed together are fed depending on the desired gas mixture of the mixing chamber with over or underpressure.

2. Method according to claim 1, **characterised in that** the exchange of air in the room produced by the recirculation system is adjusted in the recreation room, so that the atmosphere in the room is homogenous.

3. Method according to claim 1, **characterised in that** a proportion of carbon dioxide in the room is replaced in the recirculation system by replacing a proportion of the room air with carbon dioxide-poor air from the external atmosphere with a normal proportion of oxygen, whereby the proportion of air exchanged in the recirculation system is adjusted so that the air in the room maintains a concentration of carbon dioxide below fixed limits of up to 0.65% by volume.

4. Method according to claim 1, **characterised in that** the proportion of carbon dioxide in the recirculated air is lowered additionally by chemical means, e.g. by means of lime.

5. Method according to claim 1, **characterised in that** the room air passing through the recirculation system is treated as required by controlled ionisation, so that the room air with a reduced oxygen content and lower carbon dioxide content than the external atmosphere maintains an air quality over several recirculation cycles which does not differ substantially from the quality of the external atmosphere.

6. Method according to claim 1, **characterised in that** the gas mixture is formed by a mixture of air from the external atmosphere and nitrogen.

7. Method according to claim 1, **characterised in that** at least one of the recirculation properties such as air humidity, air temperature or the like is measured and controlled.

8. Method according to one of claims 1 to 5, **characterised in that** the nitrogen-containing gas mixture is produced by air separation by using a separation system, which is added to the room air in the recirculation system, and in which environmental air or nitrogen or a nitrogen-containing gas mixture is added to the recirculation in an amount, which corresponds to an equivalent of the discharged air resulting from the air separation with an increased oxygen content.

9. Method according to claim 1, **characterised in that** the nitrogen-containing gas mixture is produced by separating the environmental air.

10. Method according to claim 9, **characterised in that** an oxygen-enriched gas mixture having a proportion of oxygen of more than 21% by volume is produced during the air separation operation and is added to a second room, so that the room air in the second room has a higher oxygen content than the environmental air.

11. Method according to claim 10, **characterised in that** the room air with an increased oxygen content in the second room is treated as set forth in one of claims 1 to 10.

12. Recreation room for people or animals, in particular a sports training room, which has been filled with room air and is designed to maintain, for a short period at least, a slight overpressure compared to the external atmosphere surrounding the recreation room, whereby the recreation room is joined via an air inlet and an air outlet opening with a room air system, which is designed to adjust the room air in the recreation room so that its oxygen partial pressure is lower than the oxygen partial pressure of the external atmosphere, whereby the room air system comprises a recirculation channel and pump or a fan for moving recirculation air in the recirculation channel and a mixing chamber connected in the recirculation channel with an air inlet and an air outlet for the recirculation air and with an inlet for environmental air from the external atmosphere and a nitrogen inlet for supplying nitrogen into the mixing chamber.

13. Recreation room for people or animals, in particular a sports training room according to claim 12, **characterised in that** the room air system comprises an air separating unit for separating environmental air into a first gas mixture with a lower proportion of oxygen than the environmental air and a second gas mixture with a higher proportion of oxygen than the environmental air.

14. Recreation room for people or animals, in particular a sports training room according to claim 13, **characterised in that** a second sports training room is annexed to the sports training room, which second room is connected to the room air system, so that the gas mixture of the air separating unit, which has a greater proportion of oxygen than the environmental air, is used to produce an atmosphere with a greater proportion of oxygen in the second sports training room than the environmental air.

## Revendications

1. Procédé permettant de régler la qualité d'air d'un local dans un premier local, selon lequel l'air du local est complété continuellement ou à intervalles de temps répétés, par de l'azote ou un mélange de gaz renfermant de l'azote et pauvre en dioxyde de carbone, de façon telle que la proportion d'oxygène de l'air du local soit inférieure à 20,9 % en volume et la proportion de dioxyde de carbone de l'air du local soit inférieure à 1 % en volume ou de préférence à 0,65 % en volume, le procédé étant tel que dans le local on règle simultanément au moins une légère surpression par rapport à une atmosphère extérieure entourant le local, l'air du local étant géré dans un mode de renouvellement d'air par circulation comme renouvellement d'air par circulation à travers une chambre de mélange avec une entrée d'air et une sortie d'air pour un renouvellement d'air par circulation ainsi qu'avec une entrée pour de l'air frais provenant de l'atmosphère extérieure et une entrée d'azote pour l'introduction d'azote dans la chambre de mélange, et l'opération consistant à mélanger le mélange de gaz étant effectuée dans la chambre de mélange à laquelle sont amenés, en surpression ou en dépression, les composants air du local, azote et air frais à mélanger du mélange de gaz en fonction du mélange de gaz souhaité de la chambre de mélange.

2. Procédé selon la revendication 1, **caractérisé en ce qu'**un échange d'air de l'air du local, produit par le mode de renouvellement d'air par circulation, est réglé dans le local ou la salle de séjour ou de détente de façon telle qu'il règne une atmosphère homogène dans le local ou la salle de séjour ou de détente.

3. Procédé selon la revendication 1, **caractérisé en ce qu'**une proportion de dioxyde de carbone de l'air du local est remplacée, en mode de renouvellement d'air par circulation, par remplacement d'une proportion de l'air du local par de l'air pauvre en dioxyde de carbone en provenance de l'atmosphère extérieure et présentant une proportion normale d'oxygène, la proportion de l'air du local échangée en mode de renouvellement d'air par circulation étant réglée de façon telle, que l'air du local conserve une concentration en dioxyde de carbone restant située en-dessous de valeurs limites fixées allant jusqu'à 0,65 % en volume.

4. Procédé selon la revendication 1, **caractérisé en ce que** la proportion de dioxyde de carbone de l'air de renouvellement par circulation est abaissée en supplément par voie chimique, par exemple au moyen de chaux.

5. Procédé selon la revendication 1, **caractérisé en ce que** l'air du local géré en mode de renouvellement d'air par circulation est traité de manière conforme aux besoins, par une ionisation régulée, de façon telle que l'air du local avec une proportion d'oxygène réduite par rapport à l'atmosphère extérieure et une basse teneur en dioxyde de carbone, conserve sur plusieurs cycles de renouvellement d'air par circulation une qualité d'air, qui ne diffère pas sensiblement de la qualité de l'atmosphère extérieure.

6. Procédé selon la revendication 1, **caractérisé en ce que** le mélange de gaz est obtenu par mélange d'air de l'atmosphère extérieure et d'azote.

7. Procédé selon la revendication 1, **caractérisé en ce qu'**une au moins des propriétés de l'air de renouvellement par circulation, telles que l'humidité de l'air, la température de l'air ou analogue, est mesurée et réglée de manière régulée.

8. Procédé selon l'une des revendications 1 à 5, **caractérisé en ce que** le mélange de gaz renfermant de l'azote est produit par séparation d'air au moyen d'une installation de séparation à laquelle est amené l'air du local en mode de renouvellement d'air par circulation, et selon lequel on additionne et mélange en outre à l'air de renouvellement par circulation, de l'air de l'environnement ou de l'azote ou un mélange de gaz renfermant de l'azote, selon une quantité qui correspond à un équivalent de l'air évacué à teneur en oxygène augmentée, produit lors de la séparation d'air.

9. Procédé selon la revendication 1, **caractérisé en ce que** le mélange de gaz renfermant de l'azote est produit par séparation d'air à partir de d'air de l'environnement.

10. Procédé selon la revendication 9, **caractérisé en ce qu'**un mélange de gaz enrichi en oxygène, produit lors de la séparation d'air, avec une proportion en oxygène de plus de 21 % en volume, est amené à un deuxième local, de sorte que l'air du local présente dans le deuxième local une teneur en oxygène plus élevée par rapport à l'air de l'environnement.

11. Procédé selon la revendication 10, **caractérisé en ce que** l'air du local, à teneur en oxygène plus élevée, dans le deuxième local, est traité selon l'une des revendications 1 à 10.

12. Local ou salle de séjour ou de détente pour êtres humains ou animaux, notamment local ou salle d'entraînement pour le sport, qui est rempli d'air de local et est conçu de façon à pouvoir maintenir au moins pour une courte durée, au moins une légère surpression par rapport à une atmosphère extérieure entourant le local de séjour, le local de séjour étant relié par l'intermédiaire d'une ouverture d'entrée d'air et d'une ouverture de sortie d'air, à une installation de traitement d'air du local, qui est conçue pour régler l'air du local dans le local de séjour de façon à ce que sa pression partielle d'oxygène soit inférieure à la pression partielle d'oxygène de l'atmosphère extérieure, l'installation de traitement d'air du local comprenant un canal d'air de renouvellement d'air par circulation et une pompe ou un ventilateur pour mettre en mouvement de l'air de renouvellement par circulation dans le canal de renouvellement d'air par circulation, ainsi qu'une chambre de mélange montée dans le canal de renouvellement d'air par circulation, avec une entrée d'air et une sortie d'air pour l'air de renouvellement par circulation, ainsi qu'avec une entrée pour de l'air de l'environnement en provenance de l'atmosphère extérieure ainsi qu'une entrée d'azote pour l'amenée d'azote dans la chambre de mélange.

13. Local ou salle de séjour ou de détente pour êtres humains ou animaux, notamment salle d'entraînement pour le sport selon la revendication 12, **caractérisé en ce que** l'installation de traitement d'air du local dispose d'une unité de séparation d'air destinée à séparer de l'air de renouvellement d'air par circulation en un premier mélange de gaz avec une proportion en oxygène réduite par rapport à l'air de l'environnement, et en un deuxième mélange de gaz avec une proportion en oxygène plus élevée par rapport à l'air de l'environnement.

14. Local ou salle de séjour ou de détente pour êtres humains ou animaux, notamment local ou salle d'entraînement pour le sport selon la revendication 13, **caractérisé en ce qu'**au local d'entraînement pour le sport est associé un deuxième local d'entraînement pour le sport relié à l'installation de traitement de l'air du local, de façon telle que le mélange de gaz de l'unité de séparation d'air, qui présente une proportion d'oxygène plus élevée par rapport à l'air de l'environnement, soit utilisé pour établir dans le deuxième local d'entraînement pour le sport, une atmosphère présentant une proportion en oxygène plus élevée par rapport à l'air de l'environnement.
